**Europäisches Patentamt**

**European Patent Office**

**Office européen des brevets**

(19)

(11) Publication number : **0 386 820 B1**

## (12) EUROPEAN PATENT SPECIFICATION

(45) Date of publication of patent specification :
**19.05.93 Bulletin 93/20**

(51) Int. Cl.$^5$ : **G01H 3/08, G10L 3/00**

(21) Application number : **90200440.7**

(22) Date of filing : **26.02.90**

(54) **Method and arrangement for probabilistic pitch measuring.**

(30) Priority : **03.03.89 NL 8900520**

(43) Date of publication of application :
**12.09.90 Bulletin 90/37**

(45) Publication of the grant of the patent :
**19.05.93 Bulletin 93/20**

(84) Designated Contracting States :
**DE FR GB**

(56) References cited :
**GB-A- 2 037 129**
**US-A- 4 004 096**
**JOURNAL OF THE ACOUSTICAL SOCIETY OF AMERICA, vol. 71, no. 6, June 1982, pages 1568-1580, Acoustical Society of America, New York, US; H. DUIFHUIS et al.: "Measurement of pitch in speech: An implementation of Goldstein's theory of pitch perception"**

(56) References cited :
**JOURNAL OF THE ACOUSTICAL SOCIETY OF AMERICA, vol. 83, no. 1, January 1988, pages 257-264, Acoustical Society of America, New York, NY, US; D.J. HERMES: "Measurement of pitch by subharmonic summation"**

(73) Proprietor : **N.V. Philips' Gloeilampenfabrieken**
**Groenewoudseweg 1**
**NL-5621 BA Eindhoven (NL)**

(72) Inventor : **Beerends, John Gerard, c/o INT. OCTROOIBUREAU B.V.**
**Prof. Holstlaan 6**
**NL-5656 AA Eindhoven (NL)**

(74) Representative : **van der Kruk, Willem Leonardus et al**
**INTERNATIONAAL OCTROOIBUREAU B.V.**
**Prof. Holstlaan 6**
**NL-5656 AA Eindhoven (NL)**

## Description

The invention relates to a method of determining a pitch in a signal, deriving from the signal a probability density function of the pitch as a function of frequency and subsequently determining the pitch from the probability density function, as well as an arrangement for implementing the method.

Such a method and arrangement are known from the publication "An optimum processor theory for the central formation of the pitch of complex tones" by J.L. Goldstein, J.A.S.A., Vol. 54, No. 6 (1973), pp. 1496-1516.

It is a known fact that persons are able to recognise different pitches in a complex tone. Experiments have shown that pitch is a non-deterministic, subjective magnitude which is to be modelled stochastically. For a sine tone the probability density function of the experienced pitch is unimodal. This is to mean that no more than one maximum is found in the curve. This probability density function can be modelled as a Gaussian curve having a mean value corresponding with the frequency of the sine tone and a specific standard deviation $\sigma$.

For a complex tone the situation is more complicated. Persons are able to perceive two kinds of pitches in a complex tone, depending on whether they perceive the sound as a whole (synthetic listening) or listen to the individual partial tones (analytic listening). In the case of synthetic listening we may hear pitches that correspond with frequencies that do not occur in the signal. These virtual pitches are described by a multimodal probability density function. If one takes, for example, a complex tone constituted by two sines having frequencies of 1200 Hz and 1400 Hz, one will not only perceive a pitch of 200 Hz (basic tone) but also pitches at 173 Hz and 236 Hz. In this case the probability density function is trimodal, thus has three maximums. This perceptive behaviour is described among other things by the model for pitch perception proposed by Goldstein in his aforementioned article.

Goldstein's model is based on a stochastic formulation predicting the multimodal probability density function of the perceived virtual pitch. In his model each spectral component in the perceived signal is represented by a stochastic variable which has a Gaussian probability density function having a mean value corresponding with the frequency of the spectral component. The standard deviation of the probability density function is a free parameter of the model which function only depends on the spectral frequency. In Goldstein's model, when a complex tone is presented, a sample is determined from each Gaussian probability density function. With these samples a pattern recognizing means performs an estimate of the (lacking) basic tone. This process then results in a multimodal probability density function of the virtual pitch. Although the model can reasonably well be employed for describing the virtual pitch in signals, it does have several serious disadvantages. For example, the probability density function can only be computed for signals constituted by no more than two sines. For signals constituted by more than two sines the probability density function can be determined only by means of a Monte Carlo simulation. The model can further be used only for determining the probability density function if one knows in what octave the pitch is located.

It is an object of the invention to provide a method as well as an arrangement which is able to compute the probability density function of the (virtual) pitch for compound signals and requires little computation time for determining this probability density function. One or more pitches of the signal together with their associated standard deviations can then be derived from the probability density function.

For this purpose, the method is characterized in that:

(a) from a signal portion located in a specific time interval a frequency spectrum is derived from the signal portion located in the time interval, which frequency spectrum is constructed from samples situated at essentially equidistant frequency values in a specific first frequency interval,

(b) for a frequency value $f_1$ situated in a second frequency interval a probability contribution $K_{1i}$ is determined, being a magnitude which is the result of the presence of a frequency component in the frequency spectrum at $f_i$,

(c) the step (b) is iterated at least once to obtain at least a second probability contribution $K_{1j}$, due to the presence of at least a second frequency component in the frequency spectrum at $f_j$,

(d) at least the two probability contributions $K_{1i}$, $K_{1j}$ are multiplied by one another to obtain a probability density $K_{f1}$,

(e) the steps (b), (c) and (d) are iterated to obtain at least a second probability density $K_{f2}$, in that the probability densities $K_{f1}$, $K_{f2}$, ... are each a measure of the relative probability that a pitch occurs at the frequency $f_1$, $f_2$, ..., respectively, and in that the probability contributions $K_{1i}$, $K_{1j}$, ... are each a measure of the relative probability that a pitch at the frequency $f_1$ is the result of a frequency component or the frequency component $f_i$, $f_j$, ... respectively,

(f) from the thus obtained probability densities $K_{f1}$, $K_{f2}$, ... a probability density function of the pitch is derived as a function of frequency, from which probability density function a pitch is derived.

The method may further be characterized in that for determining the probability contribution $K_{1i}$ a probability density function $G(f, f_i, \sigma_i)$ is derived, having a mean value situated at frequency $f_i$ and a standard deviation $\sigma_i$, this probability density function being a representation of the human perception of a tone having the frequency $f_i$, in that from this probability density function $G(f, f_i, \sigma_i)$ a second probability density function $G'_n(f, f_i/n, \sigma_{in})$ is derived, having a mean value $f_i/n$ and a standard deviation $\sigma_{in}$, $n$ being an integer and selected such that $f_i/n$ is nearest to $f_1$, and in that $K_{1i}$ is essentially taken to be equal to $G_n'(f_1, f_i/n, \sigma_{in})$. According to this method use is made of subharmonics of the spectral components in the signal, a stochastic representation for these subharmonics being used to obtain the probability contribution.

The arrangement for implementing the method, comprising an input terminal for receiving the signal, is characterized in that the input terminal is coupled to an input of a frequency analysis unit arranged for obtaining a frequency spectrum of the signal portion situated in the time interval, in that an output of the frequency analysis unit is coupled to an input of a unit arranged for determining the probability contributions $K_{1i}$, $K_{1j}$, ..., $K_{2i}$, $K_{2j}$, ... and for transferring the probability contributions to an output coupled to an input of a multiplier unit, in that the multiplier unit is arranged for computing the probability densities $K_{f1}$, $K_{f2}$, ... from the respective probability contributions $K_{1i}$, $K_{1j}$, ... and $K_{2i}$, $K_{2j}$, ..., which probability densities $K_{f1}$, $K_{f2}$, ... are transferred to an output, in that this output is coupled to an input of a pitch determining means for determining a pitch from the probability density function pdf obtained from the probability densities $K_{f1}$, $K_{f2}$.

The invention will be further explained with reference to the descriptions and on the basis of the following drawing Figures in which:

Fig. 1 shows, plotted against time, the signal in the time interval,

Fig. 2 shows the frequency spectrum of the signal,

Fig. 3 shows the computation of the probability contribution $K_{1i}$,

Fig. 4 shows two examples of the probability density function pdf of the pitch plotted against frequency,

Fig. 5 shows a further example of the second probability density function, and

Fig. 6 shows an arrangement for implementing the method.

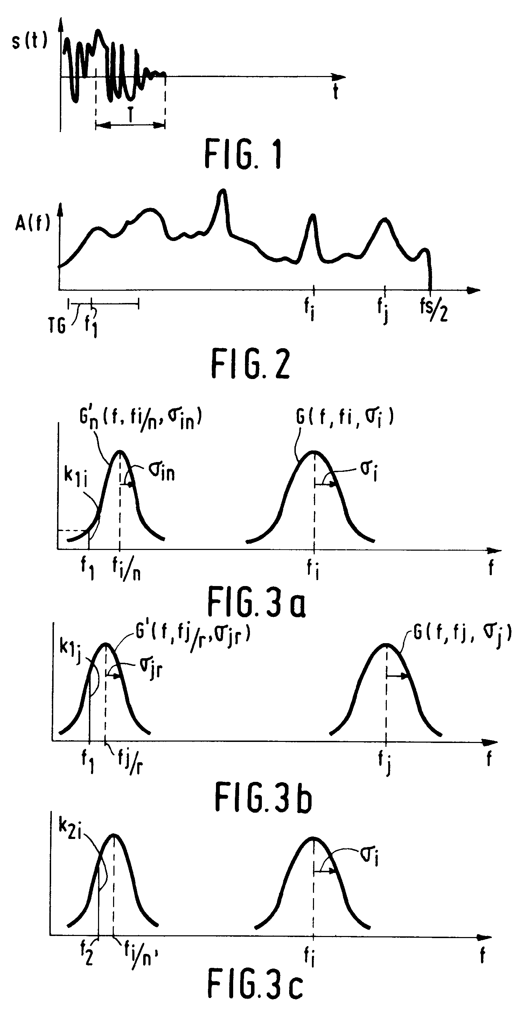

Fig. 1 shows a signal plotted against time. A speech signal may be concerned here. This is not necessary. The signal may also be, for example, a musical signal, because man can also have a pitch perception with musical signals. The signal situated in a specific time interval T is sampled and digitized and, subsequently, the sampled and digitized signal is subjected to a Fourier transform, for example, a digital Fourier transform or fast Fourier transform.

Fig. 2 shows the frequency spectrum A(f) obtained from the Fourier transform. In fact, the frequency spectrum is not a continuous curve, but is constituted by frequency samples for frequency values $m.\Delta f$, where $\Delta f = 1/T$ and m varies from 1 to M, M being equal to, for example, 512 or 1024. In fact, M depends on the rate $f_s$ at which the signal s(t) is sampled, that is:

$$M = T/2_{fs}.$$

Then, in Fig. 3a, a frequency value $f_1$ is taken to be situated in a second frequency zone TG. The frequency zone TG need not of necessity be situated in the frequency zone in which the frequency spectrum A(f) for the signal has been determined. Now the probability contribution $K_{1i}$ is determined. The meaning of the concept of probability contribution will be explained hereinbelow. The probability contribution $K_{1i}$ is a result of the presence of a frequency component at the frequency $f_i$ in the spectrum A(f). If $f_1$ were situated in the frequency range of the spectrum A(f), $f_1$ need not of necessity coincide with one of the frequency components $m.\Delta f$ in the spectrum.

The manner in which $K_{1i}$ is determined will also be explained hereinbelow. Now the probability contribution $K_{1j}$ will be determined for the same frequency $f_1$. This probability contribution is a result of the presence of a frequency component at the frequency $f_j$ in the spectrum A(f). This is represented in Fig. 3b. Determining $K_{1j}$ is effected in the same manner as determining $K_{1i}$ (cf. below).

Determining the probability contribution for the frequency $f_1$ may be continued by taking into account a third and possibly even more frequency components $f_k$, $f_l$, ... (not shown) also situated in the frequency spectrum A(f).

The significance of the probability contributions may be explained as follows. The probability contributions $K_{1i}$, $K_{1j}$,... may be considered a measure of the relative probability that a pitch at the frequency $f_1$ is the result of a frequency component at the frequency $f_i$, $f_j$, ... respectively. Let us assume, by way of example, that no more than two probability contributions $K_{1i}$ and $K_{1j}$ have been determined and that $K_{1i} = 0.2$ and $K_{1j} = 0.1$. This implies that the probability that a pitch at the frequency $f_1$ is the result of the frequency component at $f_i$ is twice as large as the probability that the pitch at the frequency $f_1$ is the result of the frequency component at $f_j$.

The frequency components $f_i$, $f_j$ need not of necessity be successive frequency components in the spectrum A(f). It is alternatively possible to include only those frequency components from the frequency spectrum that have a large amplitude, since it may be assumed that the frequency components that have a large amplitude will most affect the probability contributions for a pitch situated at the frequency $f_1$.

The probability contributions $K_{1i}$ and $K_{1j}$ are multiplied by one another and, if more probability contributions $K_{1k}$, $K_{1l}$ ... had been determined (or will yet be determined), also multiplied by $K_{1k}$, $K_{1l}$ ... and so on.

The obtained product $K_{f1}$ is termed a probability density. The connotation of the concept of probability density will be explained hereinbelow.

The procedure set out above will now be iterated for a second frequency $f_2$ situated in the second frequency zone TG. The probability contribution $K_{2i}$ will be determined. The probability contribution $K_{2i}$ is again the result of the presence of a frequency component at $f_i$ in the spectrum A(f). This is represented in Fig. 3c. A further explanation is to follow hereinbelow. No less than a second probability contribution $K_{2j}$ and possibly even more probability contributions $K_{2k}$, $K_{2l}$, ... etc. will be determined.

Now again the probability contributions are multiplied by one another to obtain the product (the probability density) $K_{f2}$. For determining the probability contributions for the frequency $f_2$, preferably the same frequencies $f_i$, $f_j$, ... etc. are taken as those used for determining the probability contributions for the frequency $f_1$. However, this is not strictly necessary.

The procedure can be iterated for still further frequencies $f_3$, $f_4$, ... etc., situated in the interval TG in order to obtain the probability densities $K_{f3}$, $K_{f4}$.

The significance of the probability densities may be explained as follows. The probability densities $K_{f1}$, $K_{f2}$, ... may be considered a measure of the relative probability that a pitch occurs at the respective frequencies $f_1$, $f_2$. Let us assume, for example, that no more than two probability densities $K_{f1}$ and $K_{f2}$ have been determined and that $K_{f1} = 0.02$ and $K_{f2} = 0.01$. The meaning of this is that the probability that a pitch occurs at the frequency $f_1$ is twice as large as the probability that a pitch occurs at the frequency $f_2$.

It should be observed in this context that the order of the steps set out hereinbefore may be changed when necessary. Alternatively, it is possible to carry out several steps more or less in parallel.

For example, first all probability contributions $K_{1i}$, $K_{1j}$, ... $K_{2i}$, $K_{2j}$, .. etc. may be determined and subsequent to this the probability densities $K_{f1}$, $K_{f2}$ etc. Needless to observe that it is equally possible to first compute the probability density $K_{f1}$ after the probability contributions $K_{1i}$, $K_{1j}$ have been determined, before proceesing to determine the probability contributions $K_{2i}$, $K_{2j}$, ... etc.

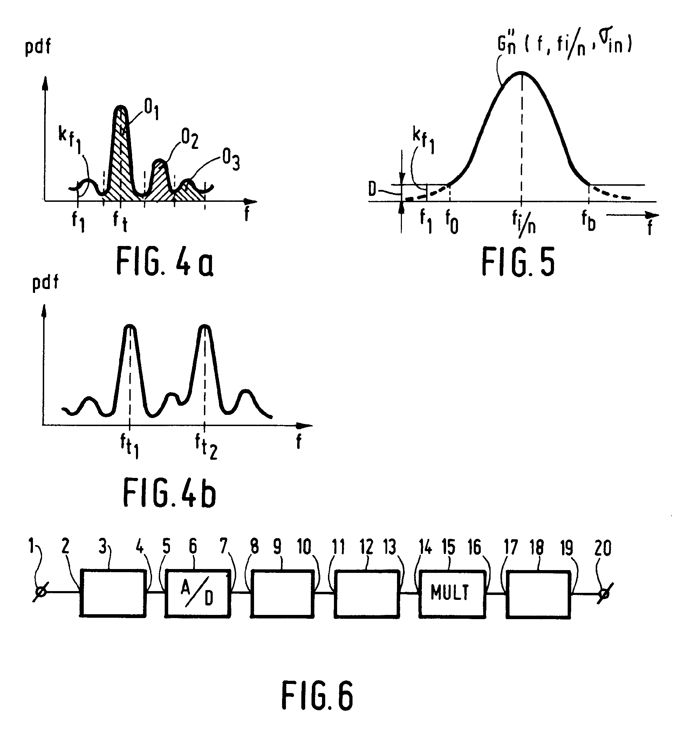

All products $K_{f1}$, $K_{f2}$, $K_{f3}$, ... etc. can now be plotted against frequency in Fig. 4a. So doing, after normalizing the surface underneath the obtained curve to 1, one will obtain the probability density function pdf of the pitch as a function of frequency. The pitch can now be derived from this probability density function pdf. For example, the absolute maximum in the curve can be determined. The frequency at which this maximum occurs can then be considered the pitch $f_t$ of the signal. The surface referenced $O_1$ may also be considered the probability that the frequency $f_t$ is the pitch of the signal.

A further possibility is to determine the surfaces $O_1$, $O_2$, $O_3$ (see Fig. 4a) underneath the pdf curve which are situated between each pair of adjacent relative minimums in the curve. The largest surface can then be determined. The frequency at which the maximum situated between the corresponding pair of minimums occurs may then be taken to be the pitch. The surface will then correspond with the probability that the frequency found is the pitch of the signal.

Subsequently, a new signal may be included and the procedure described hereinbefore may be iterated in its entirety for this new signal. In this manner the pitch variation of the signal as a function of time may be determined.

Fig. 4b shows a possibly different result for the probability density function pdf. In this Figure it is evident that there are two distinct peaks in the curve, situated at the frequencies $f_{t1}$ and $f_{t2}$. This could mean that the signal has two pitches at these frequencies $f_{t1}$ and $f_{t2}$.

The determination of the probability contribution $K_{1i}$ will now be further explained. In order to determine the probability contribution $K_{1i}$, see Fig. 3a, we assume a stochastic representation of the spectral component at the frequency $f_i$. This is shown in Fig. 3a by means of the Gaussian curve $G(f, f_i, \sigma_i)$. These Gaussian curves are known from literature, see the publication by Goldstein mentioned previously. The mean value is situated at the frequency $f_i$. The standard deviation $\sigma_i$ belonging to such Gaussian curves are extensively discussed in, i.a. the publication entitled "Frequency difference limens for short duration tones" by B.C.J. Moore in JASA 54 (1973), PP. 610-619.

Based on the Gaussian curve $G(f, f_i, \sigma_i)$ the curve $G_n(f, f_i/n, \sigma_{in})$ is now determined. For this purpose the subharmonic of $f_i$ is determined which is closest to the frequency $f_1$. This is the frequency $f_i/n$, n being an integer.

A numerical example: assuming that $f_i = 1200$ Hz and $f_1 = 145$ Hz. The subharmonic closest to 145 Hz has a frequency of 150 Hz. This means that $n = 8$, because 1200/8 is 150 Hz.

The curve $G_n(f, f_i/n, \sigma_{in})$ is again a Gaussian curve having a mean value equal to the subharmonic frequency $f_i/n$ and a standard deviation $\sigma_{in}$, which may be determined as follows:

$$\sigma_{in} = \sigma_i/(n)^\alpha$$

with $\alpha \leqq 1$, being a free parameter in the model as a result of which the model can be fitted to psychoacoustic data. The surface underneath Gaussian curve $G_n$ is equal to 1. The Gaussian curve $G_n$ is then scaled by a factor $(\beta)^n$, where $\beta \leq 1$ and is a free parameter or worded differently:

$$G_n' = (\beta)^n . G_n.$$

The probability contribution $K_{1i}$ can now be derived from the curve $G_n'(f, f_i/n, \sigma_{in})$. for that matter, $K_{1i}$ is now equal to $G_n'(f_1, f_i/n, \sigma_{in})$. The Gaussian curves G taken as a basis may be pre-scaled by an amplitude factor $H(A(f_i))$. This amplitude factor then in fact indicates to what extent the probability contribution $K_{1i}$ depends

on the amplitude of the frequency component at $f_i$. The further probability contributions may be derived in the same way.

Fig. 5 shows a different possibility for the Gaussian curve $G_n'(f, f_i/n, \sigma_{in})$ referenced $G_n''(f, f_i/n, \sigma_{in})$ here. For frequencies below $f_O$ and above $f_b$ the Gaussian curve is shown here by means of a broken line. the Gaussian curve is smaller than a specific threshold value D. In order to determine the probability contribution $K_{1i}$ for these frequencies the Gaussian curve $G_n''$ is assumed to be equal to the threshold D. Thus, if the position of $f_1$ is as shown in Fig. 5, $K_{1i}$ will be equal to D. The threshold value is a free parameter in the model.

Fig. 6 shows an arrangement for implementing the method. The signal s(t) of Fig. 1 is applied to an input terminal 1. This terminal is coupled to an input 2 of a unit 3. The unit 3 derives the samples from the signal portion s(t) situated in the time interval T. Through output 4 the samples are applied to input 5 of an analog-to-digital converter 6, where the samples are digitized. The digitized samples are applied through output 7 to the input 8 of a frequency analysis unit 9. The analysis unit 9 determines the frequency spectrum A(f), compare Fig. 2. Through the output 10 this frequency spectrum is applied to a second unit 12. In the unit 12 the probability contributions $K_{1i}$, $K_{1j}$, ... $K_{2i}$, $K_{2j}$, ...are determined, compare Fig. 3. Through the output 13 these probability contributions are applied to the input 14 of a multiplication unit 15 in which the probability contributions are multiplied by one another in order to obtain the probability density function pdf, compare Fig. 4.

This probability density function pdf is applied through the output 16 to the input of a pitch determining means 18 where the pitch $f_t$ is derived from the probability density function pdf. Through the output 19 this pitch is applied to the output terminal 20 of this arrangement.

By letting the arrangement process the signal in consecutive time intervals, at output terminal 20 the pitch of the signal will develop as a function of time.

It should be observed that the invention is not restricted to that which has been described hereinbefore with reference to the drawing Figures. The invention likewise applies to the exemplary embodiments that differ from the embodiments discussed as regards items not relating to this invention.

## Claims

1. Method of determining a pitch in a signal, deriving from the signal a probability density function of the pitch as a function of frequency and subsequently determining the pitch from the probability density function, characterized in that:

   (a) from a signal portion located in a specific time interval a frequency spectrum is derived from the signal portion located in the time interval, which frequency spectrum is constructed from samples situated at essentially equidistant frequency values in a specific first frequency interval,

   (b) for a frequency value $f_1$ situated in a second frequency interval a probability contribution $K_{1i}$ is determined, being a magnitude which is the result of the presence of a frequency component in the frequency spectrum at $f_i$,

   (c) the step (b) is iterated at least once to obtain at least a second probability contribution $K_{1j}$, due to the presence of at least a second frequency component in the frequency spectrum at $f_j$,

   (d) at least the two probability contributions $K_{1i}$, $K_{1j}$ are multiplied by one another to obtain a probability density $K_{f1}$,

   (e) the steps (b), (c) and (d) are iterated to obtain at least a second probability density $K_{f2}$, in that the probability densities $K_{f1}$, $K_{f2}$ ... are each a measure of the relative probability that a pitch occurs at the frequency $f_1$, $f_2$, ..., respectively, and in that the probability contributions $K_{1i}$, $K_{1j}$, ... are each a measure of the relative probability that a pitch at the frequency $f_1$ is the result of a frequency component or the frequency component $f_i$, $f_j$, ... respectively,

   (f) from the thus obtained probability densities $K_{f1}$, $K_{f2}$, ... a probability density function of the pitch is derived as a function of frequency, from which probability density function a pitch is derived.

2. Method as claimed in claim 1, characterized in that for determining the probability contribution $K_{1i}$ probability density function $G(f, f_i, \sigma_i)$ is derived, having a mean value situated at frequency $f_i$ and a standard deviation $\sigma_i$, this probability density function being a representation of the human perception of a tone having the frequency $f_i$, in that from this probability density function $G(f, f_i, \sigma_i)$ a second probability density function $G'_n(f, f_i/n, \sigma_{in})$ is derived, having a mean value $f_i/n$ and a standard deviation $\sigma_{in}$, n being an integer and selected such that $f_i/n$ is nearest to $f_1$, and in that $K_{1i}$ is essentially taken to be equal to $G'_n(f_1, f_i/n, \sigma_{in})$.

3. Method as claimed in Claim 2, characterized in that for those frequencies for which the second probability density function $G_n'(f, f_i/n, \sigma_{in})$ is smaller than a specific threshold value, the second probability density function $G_n'$ is assumed to be equal to this threshold value.

4. Method as claimed in Claims 1, 2 or 3, characterized in that each time the size of the surface underneath the probability density function of the pitch between pairs of frequency values for which the probability density function has (relative) minimums separated by a single maximum therebetween is determined and in that the frequency at this maximum for which the corresponding surface is largest is taken to be a pitch for the signal.

5. Arrangement for implementing the method according to any one of the preceding Claims, comprising an input terminal for receiving the signal, characterized in that the input terminal being coupled to an input of a frequency analysis unit arranged for realising a frequency spectrum of the signal portion located in the time interval, the arrangement further comprises probability contribution determining means for determining the probability contributions $K_{1i}$, $K_{1j}$, ... $K_{2i}$, $K_{2j}$ ,... and for applying the probability contributions to an output, the latter being coupled to an input of multiplication means in that the multiplication means is arranged for computing the probability densities $K_{f1}$, $K_{f2}$, ... from the probability contributions $K_{1i}$, $K_{1j}$ and $K_{2i}$, $K_{2j}$ respectively, which probability densities $K_{f1}$, $K_{f2}$ are applied to an output, in that this output is coupled to an input of a pitch determining means for determining a pitch from the probability density function pdf obtained from the probability densities $K_{f1}$, $K_{f2}$.

6. Arrangement as claimed in Claim 5 for implementing the method as claimed in Claim 2 or 3, characterized in that the second unit is arranged for deriving the probability density function $G(f, f_i, \sigma_i)$ and for deriving from this probability density function the second probability density function $G_n'(f, f_i/n, \sigma_{in})$ and is arranged for deriving $K_{1i}$ being essentially equal to $G_n'(f_1, f_i/n, \sigma_{in})$.

**Patentansprüche**

1. Verfahren zum Messen einer Tonhöhe in einem Signal, wobei aus dem Signal eine Wahrscheinlichkeitsdichtefunktion der Tonhöhe abhängig von der Frequenz bestimmt wird und anschließend die Tonhöhe aus der Wahrscheinlichkeitsdichtefunktion abgeleitet wird, dadurch gekennzeichnet, daß

(a) aus einem Signalteil in einem spezifischen Zeitintervall ein Frequenzspektrum aus dem Signalteil im Zeitintervall abgeleitet wird, wobei das Frequenzspektrum aus Abtastungen auf im wesentlich äquidistanten Frequenzwerten in einem spezifischen ersten Frequenzintervall aufgebaut ist,

(b) für einen Frequenzwert $f_1$ in einem zweiten Frequenzintervall ein Wahrscheinlichkeitsbeitrag $K_{1i}$ bestimmt wird, der eine Größe ist, die das Ergebnis einer Frequenzkomponente im Frequenzspektrum auf $f_i$ ist,

(c) der Schritt (b) wenigstens einmal wiederholt wird, um wenigstens einen zweiten Wahrscheinlichkeitsbeitrag $K_{1j}$ durch wenigstens eine zweite Frequenzkomponente im Frequenzspektrum auf $f_j$ zu erhalten,

(d) wenigstens die zwei Wahrscheinlichkeitsbeiträge $K_{1i}$, $K_{1j}$ zum Erhalten einer Wahrscheinlichkeitsdichte $K_{f1}$ miteinander multipliziert werden,

(e) die Schritte (b), (c) und (d) wiederholt werden, um wenigstens eine zweite Wahrscheinlichkeitsdichte $K_{f2}$ zu erhalten, daß die Wahrscheinlichkeitsdichten $K_{f1}$, $K_{f2}$... je ein Maß für die relative Wahrscheinlichkeit sind, daß eine Tonhöhe auf der Frequenz $f_1$, $f_2$... auftritt, und daß die Wahrscheinlichkeitsbeiträge $K_{1i}$, $K_{1j}$... je ein Maß für die relative Wahrscheinlichkeit ist, daß eine Tonhöhe auf der Frequenz $f_1$ das Ergebnis einer Frequenzkomponente bzw. der Frequenzkomponente $f_i$, $f_j$... ist,

(f) aus den auf diese Weise erhaltenen Wahrscheinlichkeitsdichten $K_{f1}$, $K_{f2}$... eine Wahrscheinlichkeitsdichtefunktion der Tonhöhe abhängig von der Frequenz abgeleitet wird, aus welcher Wahrscheinlichkeitsdichtefunktion eine Tonhöhe abgeleitet wird.

2. Verfahren nach Anspruch 1, dadurch gekennzeichnet, daß zum Bestimmen des Wahrscheinlichkeitsbeitrags $K_{1i}$ eine Wahrscheinlichkeitsdichtefunktion $G(f, f_i, \sigma_i)$ mit einem mittleren Wert auf der Frequenz $f_i$ und einer Standardabweichung $\sigma_i$ abgeleitet wird, wobei diese Wahrscheinlichkeitsdichtefunktion eine Darstellung der menschlichen Wahrnehmung eines Tones mit der Frequenz $f_i$ ist, das aus dieser Wahrscheinlichkeitsdichtefunktion $G(f, f_i, \sigma_i)$ eine zweite Wahrscheinlichkeitsdichtefunktion $G'_n(f, f_i/n, \sigma_{in})$ mit einem mittleren Wert $f_i/n$ und einer Standardabweichung $\sigma_{in}$ abgeleitet wird, worin n eine ganze Zahl und derart gewählt ist, daß $f_i/n$ möglichst nahe bei $f_1$ liegt, und daß $K_{1i}$ im wesentlichen gleich $G'_n(f_1, f_i/n, \sigma_{in})$ genommen wird.

3. Verfahren nach Anspruch 2, dadurch gekennzeichnet, daß für jene Frequenzen, für die die zweite Wahrscheinlichkeitsdichtefunktion $G'_n(f, f_i/n, \sigma_{in})$ kleiner als ein spezifischer Schwellenwert ist, die zweite Wahrscheinlichkeitsdichtefunktion $G'_n$ gleich diesem Schwellenwert genommen wird.

4. Verfahren nach Anspruch 1, 2 oder 3, dadurch gekennzeichnet, daß jeweils die Größe der Fläche unterhalb der Wahrscheinlichkeitsdichtefunktion der Tonhöhe zwischen Frequenzwertpaaren, für die die Wahrscheinlichkeitsdichtefunktion (relative) Mindestwerte getrennt von einem einzigen zwischenliegenden Höchstwert hat, bestimmt wird, und daß die Frequenz auf diesem Höchstwert, für den die entsprechende Fläche am größten ist, als eine Tonhöhe für das Signal genommen wird.

5. Anordnung zum Implementieren des Verfahrens nach einem oder mehreren der vorangehenden Ansprüche, mit einer Eingangsklemme zum Empfangen des Signals, dadurch gekennzeichnet, daß die Eingangsklemme mit einem Eingang einer Frequenzanalyseeinheit zum Verwirklichen eines Frequenzspektrums des Signalteils in dem Zeitintervall gekoppelt ist, daß die Anordnung weiter Wahrscheinlichkeitsbeitragsbestimmungsmittel zum Bestimmen der Wahrscheinlichkeitsbeiträge $K_{1i}$, $K_{1j}$...$K_{2i}$, $K_{2j}$... und zum Anlegen der Wahrscheinlichkeitsbeiträge an einen Ausgang enthält, der mit einem Eingang von Multipliziermitteln gekoppelt ist, daß die Multipliziermittel zum Berechnen der Wahrscheinlichkeitsdichten $K_{f1}$, $K_{f2}$... aus den Wahrscheinlichkeitsbeiträgen $K_{1i}$, $K_{1j}$ und $K_{2i}$, $K_{2j}$ vorgesehen sind, und die Wahrscheinlichkeitsdichten $K_{f1}$, $K_{f2}$ an einen Ausgang gelegt werden, daß dieser Ausgang mit einem Eingang eines Tonhöhenbestimmungsmittels zum Bestimmen einer Tonhöhe aus der Wahrscheinlichkeitsdichtefunktion pdf aus den Wahrscheinlichkeitsdichten $K_{f1}$, $K_{f2}$ gekoppelt ist.

6. Anordnung nach Anspruch 5 zum Implementieren des Verfahrens nach Anspruch 2 oder 3, dadurch gekennzeichnet, daß die zweite Einheit zum Ableiten der Wahrscheinlichkeitsdichtefunktion $G(f, f_i, \sigma_i)$ und zum Ableiten der zweiten Wahrscheinlichkeitsdichtefunktion $G'_n(f, f_i/n, \sigma_{in})$ aus dieser Wahrscheinlichkeitsdichtefunktion sowie zum Ableiten von $K_{1l}$ angeordnet ist, und dieser Wert im wesentlichen gleich $G'_n(f_1, f_i/n, \sigma_{in})$ ist.

**Revendications**

1. Procédé pour déterminer une hauteur tonale dans un signal, dériver du signal une fonction de densité de probabilité de la hauteur tonale en fonction de la fréquence et déterminer ultérieurement la hauteur tonale à partir de la fonction de densité de probabilité, caractérisé en ce que :

   (a) à partir d'une partie de signal située dans un intervalle de temps spécifique, on dérive un spectre de fréquence de la partie de signal située dans l'intervalle de temps, ce spectre de fréquence étant construit à partir d'échantillons situés à des valeurs de fréquence essentiellement équidistantes dans un premier intervalle de fréquence spécifique,

   (b) pour une valeur de fréquence $f_1$ située dans un second intervalle de fréquence, on détermine une contribution de probabilité $K_{1i}$, qui est une grandeur résultant de la présence d'une composante de fréquence dans le spectre de fréquence à $f_i$,

   (c) on répète l'étape (b) au moins une fois pour obtenir au moins une seconde contribution de probabilité $K_{1j}$, suite à la présence d'au moins une seconde composante de fréquence dans le spectre de fréquence à $f_j$,

   (d) on multiplie au moins les deux contributions de fréquence $K_{1i}$, $K_{1j}$ l'une par l'autre pour obtenir une densité de probabilité $K_{f1}$,

   (e) on répète les étapes (b), (c) et (d) pour obtenir au moins une seconde densité de probabilité $K_{f2}$, en ce que les densités de probabilité $K_{f1}$, $K_{f2}$, ..., sont chacune une mesure de la probabilité relative qu'une hauteur tonale se présente à la fréquence $f_1$, $f_2$, ..., respectivement, et en ce que les contributions de probabilité $K_{1i}$, $K_{1j}$, ..., sont chacune une mesure de la probabilité relative qu'une hauteur tonale à la fréquence $f_1$ soit le résultat d'une composante de fréquence à la composante de fréquence $f_i$, $f_j$, ..., respectivement,

   (f) à partir des densités de probabilité ainsi obtenues $K_{f1}$, $K_{f2}$, ..., on déduit une fonction de densité de probabilité de la hauteur tonale en fonction de la fréquence, et on dérive une hauteur tonale de cette fonction de densité de probabilité.

2. Procédé suivant la revendication 1, caractérisé en ce que, pour déterminer la contribution de probabilité $K_{1i}$, on déduit une fonction de densité de probabilité $G(f, f_i, \sigma_i)$ ayant une valeur moyenne située à la fréquence $f_i$ et un écart-type $\sigma_i$, cette fonction de densité de probabilité étant une représentation de la perception humaine d'un son de la fréquence $f_i$, en ce qu'à partir de cette fonction de densité de probabilité $G(f, f_i, \sigma_i)$, on déduit une seconde fonction de densité de probabilité $G_n'(f, f_i/n, \sigma_{in})$ ayant une valeur moyenne $f_i/n$ et un écart-type $\sigma_{in}$, n étant un nombre entier et étant choisi tel que $f_i/n$ soit le plus proche de $f_1$, et en ce que $K_{1l}$ est essentiellement pris égal à $G_n'(f_1, f_i/n, \sigma_{in})$.

3. Procédé suivant la revendication 2, caractérisé en ce que, pour les fréquences pour lesquelles la seconde fonction de densité de probabilité $G_n'(f, f_i/n, \sigma_{in})$ est plus petite qu'une valeur de seuil spécifique, la seconde fonction de densité de probabilité $G_n'$ est supposée être égale à cette valeur de seuil.

4. Procédé suivant la revendication 1, 2 ou 3, caractérisé en ce que l'on détermine chaque fois la dimension de la surface située en dessous de la fonction de densité de probabilité de la hauteur tonale entre des paires de valeurs de fréquence pour lesquelles la fonction de densité de probabilité présente des minima (relatifs) séparés par un seul maximum et en ce qu'on prend la fréquence à ce maximum pour laquelle la surface correspondante est la plus grande comme hauteur tonale pour le signal.

5. Dipositif pour implémenter le procédé suivant l'une quelconque des revendications précédentes, comprenant une borne d'entrée destinée à recevoir le signal, caractérisé en ce que la borne d'entrée est connectée à une entrée d'une unité d'analyse de fréquence conçue pour réaliser un spectre de fréquence de la partie de signal située dans l'intervalle de temps, le dispositif comprenant, en outre, des moyens de détermination des contributions de probabitité destinés à déterminer les contributions de probabilité $K_{1i}$, $K_{1j}$, ..., $K_{2i}$, $K_{2j}$, ..., et à appliquer les contributions de probabilité à une sortie, cette dernière étant connectée à une entrée d'un dispositif multiplicateur, en ce que le dispositif multiplicateur est prévu pour calculer les densités de probabilité $K_{f1}$, $K_{f2}$, ..., à partir des contributions de probabilité $K_{1i}$, $K_{1j}$, ..., et $K_{2i}$, $K_{2j}$, ..., respectivement, ces densités de probabilité $K_{f1}$, $K_{f2}$, ..., étant appliquées à une sortie, et en ce que cette sortie est connectée à une entrée d'un dispositif de détermination de hauteur tonale destiné à déterminer une hauteur tonale à partir de la fonction de densité de probabilité pdf obtenue à partir des densités de probabilité $K_{f1}$, $K_{f2}$.

6. Dispositif suivant la revendication 5 pour implémenter le procédé suivant la revendication 2 ou 3, caractérisé en ce que la seconde unité est conçue pour dériver la fonction de densité de probabilité $G(f, f_i, \sigma_i)$ et pour déduire de cette fonction de densité de probabilité, la seconde fonction de densité de probabilité $G_n'(f, f_i/n, \sigma_{in})$ et est conçue pour dériver $K_{1i}$ qui est essentiellement égal à $G_n'(f_1, f_i/n, \sigma_{in})$.

$s(t)$

$t$

$T$

## FIG. 1

$A(f)$

$TG$  $f_1$  $f_i$  $f_j$  $fs/2$

## FIG. 2

$G'_n(f, f_i/n, \sigma_{in})$   $G(f, f_i, \sigma_i)$

$k_{1i}$  $\sigma_{in}$  $\sigma_i$

$f_1$  $f_i/n$  $f_i$  $f$

## FIG. 3 a

$k_{1j}$  $G'(f, f_j/r, \sigma_{jr})$   $G(f, f_j, \sigma_j)$

$\sigma_{jr}$

$f_1$  $f_j/r$  $f_j$  $f$

## FIG. 3 b

$k_{2i}$   $\sigma_i$

$f_2$  $f_i/n'$  $f_i$  $f$

## FIG. 3 c

pdf

$G_n''(f, f_i/n, \sigma_{in})$

$k_{f_1}$

$O_1$

$O_2$

$O_3$

$f_1$ $f_t$ $f$

## FIG. 4 a

$k_{f_1}$

D

$f_1$ $f_0$ $f_i/n$ $f_b$ $f$

## FIG. 5

pdf

$f_{t_1}$ $f_{t_2}$ $f$

## FIG. 4b

1 2 3 4 5 6 7 8 9 10 11 12 13 14 15 16 17 18 19 20

A/D

MULT

## FIG. 6